# EUROPEAN PATENT APPLICATION

(11) **EP 4 588 901 A1**
(43) Date of publication of application: **23.07.2025**
(21) Application number: 22958807.4
(22) Date of filing: 15.09.2022
(51) Int. Cl.: C03C 3/12

(54) **GLASS COMPOSITION AND REFERENCE GLASS SAMPLE**

(71) Applicant: NIKON CORPORATION, Tokyo 140-8601 (JP)
(72) Inventor: YOSHIMOTO, Kohei, Tokyo 140-8601 (JP); FUJIWARA, Miki, Tokyo 140-8601 (JP); SHINOHARA, Kiyoaki, Tokyo 140-8601 (JP)
(74) Representative: Viering, Jentschura & Partner mbB Patent- und Rechtsanwälte
(86) International application number: PCT/JP2022/034568
(87) International publication number: WO 2024/057484

(57) **Abstract**

A glass composition includes a major component and an additional component. The additional component includes at least one element selected from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm, Yb, Lu, Rb, Cs, Ba, Ga, Ge, In, Sn, Sb, Pb, Bi, Au, Pt, Ag, Ir, Pd, Rh, Ru, Re, F, Cl, Br, I, and S, and is introduced in an amount more than 0 mg/kg and up to 1500 mg/kg for each additional component.

## Description

### Technical Field

The present invention relates to a glass composition and a standard reference glass.

### Background Art

In elemental analysis of solid materials via inductively coupled plasma (ICP) mass spectrometry, secondary ion mass spectrometry (SIMS), or X-ray fluorescence analysis (XRF), solid reference materials enabling trace element analysis are in demand.

### Prior Art Documents

### Patent Documents

[Patent Document 1] U.S. Patent No. 8742334

### Summary of the Invention

One aspect of the present invention provides a glass composition comprising: a major component; and an additional component, wherein the additional component includes at least one element selected from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm, Yb, Lu, Rb, Cs, Ba, Ga, Ge, In, Sn, Sb, Pb, Bi, Au, Pt, Ag, Ir, Pd, Rh, Ru, Re, F, Cl, Br, I, and S, and is introduced in an amount more than 0 mg/kg and up to 1500 mg/kg for each additional component.

Further, provided is a glass composition, wherein, by mass%: a content rate of TeO₂ is from 50% to 90%; and at least two components selected from Bi₂O₃, B₂O₃, GeO₂, Al₂O₃, Ga₂O₃, Li₂O, La₂O₃, BaO, ZnO, and WO₃ are included.

Further, provided is a glass composition comprising: a major component wherein, by mass%: a content rate of TeO₂ is from 55% to 90%, a content rate of Bi₂O₃ is from 0% to 35%, a content rate of B₂O₃ is from 0% to 20%, a content rate of GeO₂ is from 0% to 20%, a content rate of Al₂O₃ is from 0% to 20%, a content rate of Ga₂O₃ is from 0% to 20%₃, a content rate of Li₂O is from 0% to 10%, and a content rate of La₂O₃ is from 0% to 5%; and at least one component selected from Ti, V, Cr, Mn, Fe, Co, Ni, Cu, Zn, Zr, Nb, Mo, Hf, Ta, and W is included as an additional component in an amount more than 0 mg/kg and up to 1500 mg/kg for each additional component.

Further, provided is A glass composition comprising: a major component wherein, by mass%: the content rate of TeO₂ is from 50% to 90%, the content rate of Bi₂O₃ is from 0% to 20%; the content rate of B₂O₃ is from 0% to 20%; the content rate of GeO₂ is from 0% to 20%; the content rate of Al₂O₃ is from 0% to 20%; the content rate of Ga₂O₃ is from 0% to 20%; a content rate of BaO is from 0% to 30%; a content rate of ZnO is from 0% to 20%; a content rate of Li₂O is from 0% to 10%; and a content rate of WO₃ is from 0% to 35%; and at least one component selected from Sc, Y, La, Ce, Pr, Nd, Sm, Eu, Gd, Tb, Dy, Ho, Er, Tm, Yb, and Lu is included as an additional component in an amount more than 0 mg/kg and up to 1500 mg/kg for each additional component.

Further, provided is a glass composition comprising: a major component wherein, by mass%: a content rate of TeO₂ is from 50% to 90%, a content rate of Bi₂O₃ is from 0% to 30%; a content rate of B₂O₃ is from 0% to 20%; a content rate of Al₂O₃ is from 0% to 20%; a content rate of ZnO is from 0% to 20%; a content rate of Li₂O is from 0% to 10%; a content rate of La₂O₃ is from 0% to 5%; and a content rate of WO₃ is from 0% to 35%; and at least one component selected from Rb, Cs, Ba, Ga, Ge, In, Sn, Sb, Pb, and Bi is included as an additional component in an amount more than 0 mg/kg and up to 1500 mg/kg for each additional component; and the major components exclude the additional components.

Further, provided is a glass composition comprising: a major component wherein, by mass%: a content rate of TeO₂ is from 50% to 85%, a content rate of Bi₂O₃ is from 0% to 35%; a content rate of B₂O₃ is from 0% to 15%; a content rate of GeO₂ is from 0% to 20%; a content rate of Al₂O₃ is from 0% to 10%; a content rate of Ga₂O₃ is from 0% to 20%; a content rate of BaO is from 0% to 30%; a content rate of ZnO is from 0% to 20%; a content rate of Li₂O is from 0% to 10%; a content rate of La₂O₃ is from 0% to 5%; and a content rate of WO₃ is from 0% to 35%; and at least one component selected from Au, Pt, Ag, Ir, Pd, Rh, Ru, and Re is included as an additional component in an amount more than 0 mg/kg and up to 1500 mg/kg for each additional component.

Further, provided is a glass composition comprising: a major component wherein, by mass%: a content rate of TeO₂ is from 50% to 90%, a content rate of Bi₂O₃ is from 0% to 30%; a content rate of B₂O₃ is from 0% to 15%; a content rate of GeO₂ is from 0% to 20%; a content rate of Al₂O₃ is from 0% to 20%; a content rate of Ga₂O₃ is from 0% to 20%; a content rate of BaO is from 0% to 30%; a content rate of ZnO is from 0% to 20%; a content rate of Li₂O is from 0% to 10%; a content rate of La₂O₃ is from 0% to 5%; and a content rate of WO₃ is from 0% to 35%; and at least one component selected from F, Cl, Br, I, and S is included as an additional component in an amount more than 0 mg/kg and up to 1500 mg/kg for each additional component.

Another aspect of the present invention provides a standard reference glass for elemental analysis comprising: a first glass composition, wherein at least one component selected from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm, Yb, Lu, Rb, Cs, Ba, Ga, Ge, In, Sn, Sb, Pb, Bi, Au, Pt, Ag, Ir, Pd, Rh, Ru, Re, F, Cl, Br, I, and S is introduced in an amount of 0 to 1500 mg/kg (first content amount); and a second glass composition, wherein the same component is introduced in an amount more than 0 mg/kg and up to 1500 mg/kg (second content amount) for each additional component, wherein the second content amount being greater than the first content amount.

### Detailed Description

Unless otherwise specified, the content percentages of each major component described in this specification are expressed as mass percentages relative to the total weight of the glass in terms of oxide equivalent composition. The term "oxide equivalent composition" as used herein refers to the composition expressed assuming that all oxides, composite salts, and other raw materials used as glass components decompose entirely into oxides during melting, and the total mass of these oxides is considered as 100%. Furthermore, unless otherwise stated, the concentrations of additional components are expressed as "mg/kg" based on the form in which they are introduced, such as oxides, chlorides, or fluorides. The unit "mg/kg" is synonymous with weight ppm.

The term "Q content: 0-N%" includes cases where the Q component is absent (0%) and cases where the Q component exceeds 0% but does not exceed N%.

The term "devitrification resistance stability" refers to the resistance of the glass to devitrification. "Devitrification" refers to the loss of transparency in the glass caused by phenomena such as crystallization or phase separation when the glass is heated above its glass transition temperature or cooled below its liquidus temperature from a molten state.

The following describes embodiments (hereinafter referred to as "the present embodiment") of the present invention. These embodiments are examples provided to illustrate the invention and are not intended to limit its scope.

The glass composition and standard reference glass according to the present embodiment use tellurite glass as a base material, with additional components uniformly introduced at trace levels (ppm levels). Thus, it can be used as a reference material for localized trace analysis methods such as laser ablation, inductively coupled plasma (ICP) mass spectrometry, secondary ion mass spectrometry (SIMS), and X-ray fluorescence analysis (XRF).

The glass composition and standard reference glass of the present embodiment have a low melting temperature and high devitrification resistance stability. Conventional glass compositions often unintentionally contain trace amounts of elements as "impurities." In contrast, the glass composition of the present embodiment suppresses the inclusion of unintended elements while incorporating intended elements at trace levels.

### [Glass Composition]

The glass composition of the present embodiment comprises
a major component and an additional component, wherein the additional component includes at least one element selected from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm, Yb, Lu, Rb, Cs, Ba, Ga, Ge, In, Sn, Sb, Pb, Bi, Au, Pt, Ag, Ir, Pd, Rh, Ru, Re, F, Cl, Br, I, and S, and is introduced in an amount more than 0 to 1500 mg/kg for each additional component.

The glass composition also includes TeO₂ at 50-90% by mass% and at least two selected from the group consisting of Bi₂O₃, B₂O₃, GeO₂, Al₂O₃, Ga₂O₃, Li₂O, La₂O₃, BaO, ZnO, and WO₃.

The glass composition according to the present embodiment has a major component, by mass%, as follows: TeO₂ content: 55-90%, Bi₂O₃ content: 0-35%, B₂O₃ content: 0-20%, GeO₂ content: 0-20%, Al₂O₃ content: 0-20%, Ga₂O₃ content: 0-20%, Li₂O content: 0-10%, and La₂O₃ content: 0-5%. Additionally, at least one selected element from Ti, V, Cr, Mn, Fe, Co, Ni, Cu, Zn, Zr, Nb, Mo, Hf, Ta, and W is introduced as an additional component in an amount more than 0 to 1500 mg/kg for each component.

The glass composition according to the present embodiment has a major component, by mass%, as follows: TeO₂ content: 50-90%, Bi₂O₃ content: 0-20%, B₂O₃ content: 0-20%, GeO₂ content: 0-20%, Al₂O₃ content: 0-20%, Ga₂O₃ content: 0-20%, BaO content: 0-30%, ZnO content: 0-20%, Li₂O content: 0-10%, and WO₃ content: 0-35%. Additionally, at least one selected element from Sc, Y, La, Ce, Pr, Nd, Sm, Eu, Gd, Tb, Dy, Ho, Er, Tm, Yb, and Lu is introduced as an additional component in an amount more than 0 to 1500 mg/kg for each component.

The glass composition according to the present embodiment has a major component, by mass%, as follows: TeO₂ content: 50-90%, Bi₂O₃ content: 0-30%, B₂O₃ content: 0-20%, Al₂O₃ content: 0-20%, ZnO content: 0-20%, Li₂O content: 0-10%, La₂O₃ content: 0-5%, and WO₃ content: 0-35%. Additionally, at least one selected element from Rb, Cs, Ba, Ga, Ge, In, Sn, Sb, Pb, and Bi is introduced as an additional component in an amount more than 0 to 1500 mg/kg for each component, excluding the major components.

The glass composition according to the present embodiment further has a major component, by mass%, as follows: TeO₂ content: 50-85%, Bi₂O₃ content: 0-35%, B₂O₃ content: 0-15%, GeO₂ content: 0-20%, Al₂O₃ content: 0-10%, Ga₂O₃ content: 0-20%, BaO content: 0-30%, ZnO content: 0-20%, Li₂O content: 0-10%, La₂O₃ content: 0-5%, and WO₃ content: 0-35%. Additionally, at least one selected element from Au, Pt, Ag, Ir, Pd, Rh, Ru, and Re is introduced as an additional component in an amount more than 0 to 1500 mg/kg for each component.

The glass composition according to the present embodiment has a major component, by mass%, as follows: TeO₂ content: 50-90%, Bi₂O₃ content: 0-30%, B₂O₃ content: 0-15%, GeO₂ content: 0-20%, Al₂O₃ content: 0-20%, Ga₂O₃ content: 0-20%, BaO content: 0-30%, ZnO content: 0-20%, Li₂O content: 0-10%, La₂O₃ content: 0-5%, and WO₃ content: 0-35%. Additionally, at least one selected element from F, Cl, Br, I, and S is introduced as an additional component in an amount more than 0 to 1500 mg/kg for each component.

The composition of the glass according to the present embodiment will now be described in detail.

The major components of the glass composition according to the present embodiment refer to diverse oxides that can generally form the glass matrix, such as TeO₂, Bi₂O₃, GeO₂, Ga₂O₃, BaO, ZnO, WO₃, and others. These are glass-forming components excluding the additional elements.

TeO₂ is an essential major component in the present embodiment. It lowers the melting temperature of the glass and enhances its devitrification resistance stability. However, if the TeO₂ content is too high, the devitrification resistance stability may decrease. From this perspective, the content of TeO₂ is from 50% to 90%. The preferred lower limit is 55%, more preferably 60%, and even more preferably 65%. The preferred upper limit is 85%, more preferably 80%, and even more preferably 75%.

Bi₂O₃ is employed as a major component in this embodiment. It lowers the melting temperature of the glass and, when coexisting with TeO₂, improves the devitrification resistance stability of the glass. However, if the Bi₂O₃ content is too high, the relative TeO₂ content decreases, thereby worsening devitrification resistance stability. From this perspective, the Bi₂O₃ content is from 0% to 35%. The preferred lower limit is 10%, more preferably 15%, and even more preferably 20%. The preferred upper limit is 30%, more preferably 27%, and even more preferably 24%.

B₂O₃ is adopted as a major component in this embodiment. It enhances the devitrification resistance stability of the glass. However, if the B₂O₃ content is too high, the melting temperature may increase. From this perspective, the B₂O₃ content is from 0% to 20%. The preferred lower limit is 2%, more preferably 4%, and even more preferably 6%. The preferred upper limit is 16%, more preferably 14%, and even more preferably 10%.

GeO₂ is adopted as a major component in this embodiment. It enhances the devitrification resistance stability of the glass. However, if the GeO₂ content is too high, the melting temperature of the glass may increase. Additionally, GeO₂ is an expensive raw material. From this perspective, the GeO₂ content is from 0% to 20%. The preferred lower limit is 4%, more preferably 8%, and even more preferably 12%. The preferred upper limit is 18%, more preferably 16%, and even more preferably 14%.

Al₂O₃ is employed as a major component in this embodiment. When added in appropriate amounts, it enhances the devitrification resistance stability of the glass. However, if the Al₂O₃ content is too high, the melting temperature increases, and devitrification resistance stability may decrease. From this perspective, the Al₂O₃ content is from 0% to 20%. The preferred lower limit is 4%, more preferably 8%, and even more preferably 10%. The preferred upper limit is 17%, more preferably 14%, and even more preferably 12%.

Ga₂O₃ is employed as a major component in this embodiment. It enhances the devitrification resistance stability of the glass. However, if the Ga₂O₃ content is too high, the melting temperature of the glass may increase. Moreover, Ga₂O₃ is an expensive raw material. From this perspective, the Ga₂O₃ content is from 0% to 20%. The preferred lower limit is 4%, more preferably 8%, and even more preferably 12%. The preferred upper limit is 18%, more preferably 16%, and even more preferably 14%.

BaO is employed as a major component in this embodiment. It enhances the devitrification resistance stability of the glass, and its coexistence with TeO₂ further improves the devitrification resistance stability. However, if the BaO content is too high, the melting temperature of the glass may increase. From this perspective, the BaO content is from 0% to 30%. The preferred lower limit is 10%, more preferably 15%, and even more preferably 20%. The preferred upper limit is 28%, more preferably 25%, and even more preferably 22%.

ZnO is employed as a major component in this embodiment. It enhances the devitrification resistance stability of the glass, and its coexistence with TeO₂ further improves the devitrification resistance stability. However, if the ZnO content is too high, the melting temperature of the glass may increase. From this perspective, the ZnO content is from 0% to 20%. The preferred lower limit is 2%, more preferably 6%, and even more preferably 10%. The preferred upper limit is 18%, more preferably 16%, and even more preferably 14%.

Li₂O is employed as a major component in this embodiment. It lowers the melting temperature of the glass and improves its meltability. However, if the Li₂O content is too high, the viscosity of the glass decreases, and its devitrification resistance stability deteriorates. From this perspective, the Li₂O content is from 0% to 10%. The preferred lower limit is 0.5%, more preferably 1.5%, and even more preferably 2.5%. The preferred upper limit is 8%, more preferably 6%, and even more preferably 3.5%.

La₂O₃ is employed as a major component in this embodiment. It improves devitrification resistance stability when added in appropriate amounts. However, if the La₂O₃ content is too high, the melting temperature of the glass increases, and its meltability deteriorates. Additionally, excessive La₂O₃ may reduce devitrification resistance stability. From this perspective, the La₂O₃ content is from 0% to 5%. The preferred lower limit is 0.4%, more preferably 0.8%, and even more preferably 1.2%. The preferred upper limit is 4%, more preferably 3%, and even more preferably 2%.

WO₃ is employed as a major component in this embodiment. It lowers the melting temperature of the glass and, when coexisting with TeO₂, improves the devitrification resistance stability of the glass. However, if the WO₃ content is too high, the relative content of TeO₂ decreases, thereby worsening devitrification resistance stability. From this perspective, the WO₃ content is from 0% to 35%. The preferred lower limit is 15%, more preferably 20%, and even more preferably 25%. The preferred upper limit is 33%, more preferably 30%, and even more preferably 27%.

In addition to the major components described above, other major components may be added as long as they do not hinder the intended properties of the glass composition according to the present embodiment. If any of the major components mentioned above, excluding the essential component TeO₂, are not employed as major components in this embodiment, such non-employed components (e.g., Zn, W, La, Ba, Ga, Ge, Bi, etc.) may be introduced as additional components into the glass composition.

The content of the second most abundant major component, following the essential component TeO₂, is from 10% to 35% by mass%. The preferred lower limit is 15%, more preferably 18%, and even more preferably 21%. The preferred upper limit is 30%, more preferably 27%, and even more preferably 24%.

The glass composition according to the present embodiment may have elements added to it depending on the purpose, such as elemental analysis. The elements to be added are categorized into five groups: the first additional component group through the fifth additional component group.

The first additional component group (transition elements) preferably includes Ti, V, Cr, Mn, Fe, Co, Ni, Cu, Zn, Zr, Nb, Mo, Hf, Ta, and W. These may be introduced into the glass composition as oxides, hydroxides, carbonates, or nitrates.

The second additional component group (rare earth elements) preferably includes Sc, Y, La, Ce, Pr, Nd, Sm, Eu, Gd, Tb, Dy, Ho, Er, Tm, Yb, and Lu. These may also be introduced into the glass composition as oxides, hydroxides, carbonates, or nitrates.

The third additional component group preferably includes Rb, Cs, Ba, Ga, Ge, In, Sn, Sb, Pb, and Bi. These may be introduced into the glass composition as oxides, hydroxides, carbonates, or nitrates.

The fourth additional component group (noble metals) preferably includes Au, Pt, Ag, Ir, Pd, Rh, Ru, and Re. These may be introduced into the glass composition as oxides or chlorides.

The fifth additional component group (non-metals) preferably includes F, Cl, Br, I, and **S.** These may be introduced into the glass composition as fluorides, chlorides, bromides, iodides, sulfides, or sulfates.

The additional components may be introduced into a single glass composition in accordance with its intended purpose, with 1 to 16 types of additional components being used. Preferably, three types are used, more preferably two, and even more preferably one. Additionally, multiple additional components from different groups may be introduced into a single glass composition. Note that the additional components must differ from the cations of the oxides among the major components.

Each additional component is introduced into a single glass composition in a quantity ranging from more than 0 to 1500 mg/kg (mass ppm). The preferred lower limit for the quantity of introduced additional components is 15 mg/kg, more preferably 30 mg/kg, and even more preferably 40 mg/kg. The preferred upper limit is 1400 mg/kg, more preferably 1250 mg/kg, and even more preferably 1050 mg/kg.

In addition to the aforementioned components, other optional components may be added as long as they do not hinder the intended properties of the glass composition according to the present embodiment.

### <Glass Composition Containing the First Additive Component Group>

Particularly in glass compositions containing the first additional component group, TeO₂ is an essential major component. It lowers the melting temperature of the glass and enhances its devitrification resistance stability. However, if the TeO₂ content is too high, the devitrification resistance stability may decrease. From this perspective, the TeO₂ content is from 55% to 90%. The preferred lower limit is 60%, more preferably 65%, and even more preferably 70%. The preferred upper limit is 85%, more preferably 80%, and even more preferably 75%.

Bi₂O₃ is employed as a major component in this embodiment. It lowers the melting temperature of the glass and, when coexisting with TeO₂, improves the devitrification resistance stability of the glass. However, if the Bi₂O₃ content is too high, the relative TeO₂ content decreases, thereby worsening devitrification resistance stability. From this perspective, the Bi₂O₃ content is from 0% to 35%. The preferred lower limit is 10%, more preferably 15%, and even more preferably 20%. The preferred upper limit is 30%, more preferably 27%, and even more preferably 24%.

B₂O₃ is employed as a major component in this embodiment. It enhances the devitrification resistance stability of the glass. However, if the B₂O₃ content is too high, the melting temperature may increase. From this perspective, the B₂O₃ content is from 0% to 20%. The preferred lower limit is 2%, more preferably 4%, and even more preferably 6%. The preferred upper limit is 16%, more preferably 14%, and even more preferably 10%.

GeO₂ is employed as a major component in this embodiment. It enhances the devitrification resistance stability of the glass. However, if the GeO₂ content is too high, the melting temperature of the glass may increase. Additionally, GeO₂ is an expensive raw material. From this perspective, the GeO₂ content is from 0% to 20%. The preferred lower limit is 4%, more preferably 8%, and even more preferably 12%. The preferred upper limit is 18%, more preferably 16%, and even more preferably 14%.

Al₂O₃ is employed as a major component in this embodiment. When added in appropriate amounts, it enhances the devitrification resistance stability of the glass. However, if the Al₂O₃ content is too high, the melting temperature increases, and devitrification resistance stability may decrease. From this perspective, the Al₂O₃ content is from 0% to 20%. The preferred lower limit is 4%, more preferably 8%, and even more preferably 10%. The preferred upper limit is 17%, more preferably 14%, and even more preferably 12%.

Ga₂O₃ is employed as a major component in this embodiment. It enhances the devitrification resistance stability of the glass. However, if the Ga₂O₃ content is too high, the melting temperature of the glass may increase. Moreover, Ga₂O₃ is an expensive raw material. From this perspective, the Ga₂O₃ content is from 0% to 20%. The preferred lower limit is 4%, more preferably 8%, and even more preferably 12%. The preferred upper limit is 18%, more preferably 16%, and even more preferably 14%.

Li₂O is employed as a major component in this embodiment. It lowers the melting temperature of the glass and improves its meltability. However, if the Li₂O content is too high, the viscosity of the glass decreases, and its devitrification resistance stability deteriorates. From this perspective, the Li₂O content is from 0% to 10%. The preferred lower limit is 0.5%, more preferably 1.5%, and even more preferably 2.5%. The preferred upper limit is 8%, more preferably 6%, and even more preferably 3.5%.

La₂O₃ is employed as a major component in this embodiment. It improves devitrification resistance stability when added in appropriate amounts. However, if the La₂O₃ content is too high, the melting temperature of the glass increases, and its meltability deteriorates. Additionally, excessive La₂O₃ may reduce devitrification resistance stability. From this perspective, the La₂O₃ content is from 0% to 5%. The preferred lower limit is 0.4%, more preferably 0.8%, and even more preferably 1.2%. The preferred upper limit is 4%, more preferably 3%, and even more preferably 2%.

In addition to the major components described above, other major components may be added within a range that does not hinder the achievement of the intended glass composition in this embodiment. Furthermore, if any of the major components other than the essential component TeO₂ are not used as major components in this embodiment, they may be introduced as additional components into the glass composition.

The content of the second most abundant major component, following the essential component TeO₂, is from 10% to 35% by weight. The preferred lower limit is 15%, more preferably 18%, and even more preferably 21%. The preferred upper limit is 30%, more preferably 27%, and even more preferably 24%.

### <Glass Composition Containing the Second Additive Component Group>

Particularly in glass compositions containing the second additional component group, TeO₂ is an essential major component. It lowers the melting temperature of the glass and enhances its devitrification resistance stability. However, if the TeO₂ content is too high, the devitrification resistance stability may decrease. From this perspective, the TeO₂ content is from 50% to 90%. The preferred lower limit is 55%, more preferably 60%, and even more preferably 65%. The preferred upper limit is 80%, more preferably 75%, and even more preferably 70%.

Bi₂O₃ is employed as a major component in this embodiment. It lowers the melting temperature of the glass and, when coexisting with TeO₂, improves the devitrification resistance stability of the glass. However, if the Bi₂O₃ content is too high, the relative TeO₂ content decreases, thereby worsening devitrification resistance stability. From this perspective, the Bi₂O₃ content is from 0% to 20%. The preferred lower limit is 3%, more preferably 7%, and even more preferably 10%. The preferred upper limit is 18%, more preferably 16%, and even more preferably 13%.

B₂O₃ is employed as a major component in this embodiment. It enhances the devitrification resistance stability of the glass. However, if the B₂O₃ content is too high, the melting temperature may increase. From this perspective, the B₂O₃ content is from 0% to 20%. The preferred lower limit is 2%, more preferably 4%, and even more preferably 6%. The preferred upper limit is 16%, more preferably 14%, and even more preferably 10%.

GeO₂ is employed as a major component in this embodiment. It enhances the devitrification resistance stability of the glass. However, if the GeO₂ content is too high, the melting temperature of the glass may increase. Additionally, GeO₂ is an expensive raw material. From this perspective, the GeO₂ content is from 0% to 20%. The preferred lower limit is 4%, more preferably 8%, and even more preferably 12%. The preferred upper limit is 18%, more preferably 16%, and even more preferably 14%.

Al₂O₃ is employed as a major component in this embodiment. When added in appropriate amounts, it enhances the devitrification resistance stability of the glass. However, if the Al₂O₃ content is too high, the melting temperature increases, and devitrification resistance stability may decrease. From this perspective, the Al₂O₃ content is from 0% to 20%. The preferred lower limit is 4%, more preferably 8%, and even more preferably 10%. The preferred upper limit is 17%, more preferably 14%, and even more preferably 12%.

Ga₂O₃ is employed as a major component in this embodiment. It enhances the devitrification resistance stability of the glass. However, if the Ga₂O₃ content is too high, the melting temperature of the glass may increase. Moreover, Ga₂O₃ is an expensive raw material. From this perspective, the Ga₂O₃ content is from 0% to 20%. The preferred lower limit is 4%, more preferably 8%, and even more preferably 12%. The preferred upper limit is 18%, more preferably 16%, and even more preferably 14%.

BaO is employed as a major component in this embodiment. It enhances the devitrification resistance stability of the glass and, when coexisting with TeO₂, improves the devitrification resistance stability of the glass. However, if the BaO content is too high, the melting temperature of the glass may increase. From this perspective, the BaO content is from 0% to 30%. The preferred lower limit is 10%, more preferably 15%, and even more preferably 20%. The preferred upper limit is 28%, more preferably 25%, and even more preferably 22%.

ZnO is employed as a major component in this embodiment. It enhances the devitrification resistance stability of the glass and, when coexisting with TeO₂, improves the devitrification resistance stability of the glass. However, if the ZnO content is too high, the melting temperature of the glass may increase. From this perspective, the ZnO content is from 0% to 20%. The preferred lower limit is 2%, more preferably 6%, and even more preferably 10%. The preferred upper limit is 18%, more preferably 16%, and even more preferably 14%.

Li₂O is employed as a major component in this embodiment. It lowers the melting temperature of the glass and improves its fusibility. However, if the Li₂O content is too high, the viscosity of the glass decreases, and devitrification resistance stability is impaired. From this perspective, the Li₂O content is from 0% to 10%. The preferred lower limit is 1%, more preferably 3%, and even more preferably 5%. The preferred upper limit is 9%, more preferably 8%, and even more preferably 6%.

WO₃ is employed as a major component in this embodiment. It lowers the melting temperature of the glass and, when coexisting with TeO₂, improves the devitrification resistance stability of the glass. However, if the WO₃ content is too high, the relative content of TeO₂ decreases, worsening devitrification resistance stability. From this perspective, the WO₃ content is from 0% to 35%. The preferred lower limit is 15%, more preferably 20%, and even more preferably 25%. The preferred upper limit is 33%, more preferably 30%, and even more preferably 27%.

In addition to the major components described above, other major components may be added within a range that does not hinder the achievement of the intended glass composition in this embodiment. Furthermore, if any of the major components other than the essential component TeO₂ are not used as major components in this embodiment, they may be introduced as additional components into the glass composition.

The content of the second most abundant major component, following the essential component TeO₂, is from 10% to 35% by mass%. The preferred lower limit is 15%, more preferably 18%, and even more preferably 21%. The preferred upper limit is 30%, more preferably 27%, and even more preferably 24%.

### <Glass Composition Containing the Third Additive Component Group>

Particularly in glass compositions containing the third additional component group, TeO₂ is an essential major component. It lowers the melting temperature of the glass and enhances its devitrification resistance stability. However, if the TeO₂ content is too high, the devitrification resistance stability may decrease. From this perspective, the TeO₂ content is from 50% to 90%. The preferred lower limit is 60%, more preferably 65%, and even more preferably 70%. The preferred upper limit is 85%, more preferably 80%, and even more preferably 75%.

Bi₂O₃ is employed as a major component in this embodiment. It lowers the melting temperature of the glass and, when coexisting with TeO₂, improves the devitrification resistance stability of the glass. However, if the Bi₂O₃ content is too high, the relative TeO₂ content decreases, worsening devitrification resistance stability. From this perspective, the Bi₂O₃ content is form 0% to 30%. The preferred lower limit is 10%, more preferably 15%, and even more preferably 20%. The preferred upper limit is 28%, more preferably 26%, and even more preferably 24%.

B₂O₃ is employed as a major component in this embodiment. It enhances the devitrification resistance stability of the glass. However, if the B₂O₃ content is too high, the melting temperature may increase. From this perspective, the B₂O₃ content is from 0% to 20%. The preferred lower limit is 2%, more preferably 4%, and even more preferably 6%. The preferred upper limit is 16%, more preferably 14%, and even more preferably 10%.

Al₂O₃ is employed as a major component in this embodiment. When added in appropriate amounts, it enhances the devitrification resistance stability of the glass. However, if the Al₂O₃ content is too high, the melting temperature increases, and devitrification resistance stability may decrease. From this perspective, the Al₂O₃ content is from 0% to 20%. The preferred lower limit is 4%, more preferably 8%, and even more preferably 10%. The preferred upper limit is 17%, more preferably 14%, and even more preferably 12%.

ZnO is employed as a major component in this embodiment. It enhances the devitrification resistance stability of the glass and, when coexisting with TeO₂, improves the devitrification resistance stability of the glass. However, if the ZnO content is too high, the melting temperature of the glass may increase. From this perspective, the ZnO content is from 0% to 20%. The preferred lower limit is 2%, more preferably 6%, and even more preferably 10%. The preferred upper limit is 18%, more preferably 16%, and even more preferably 14%.

Li₂O is employed as a major component in this embodiment. It lowers the melting temperature of the glass and improves its meltability. However, if the Li₂O content is too high, the viscosity of the glass decreases, and its devitrification resistance stability deteriorates. From this perspective, the Li₂O content is from 0% to 10%. The preferred lower limit is 0.5%, more preferably 1.5%, and even more preferably 2.5%. The preferred upper limit is 8%, more preferably 6%, and even more preferably 3.5%.

La₂O₃ is employed as a major component in this embodiment. When appropriately added, it improves devitrification resistance stability. However, if the content of La₂O₃ is too high, the melting temperature of the glass increases, fusibility decreases, and devitrification resistance stability is adversely affected. From this perspective, the La₂O₃ content is from 0% to 5%. The preferred lower limit is 0.4%, more preferably 0.8%, and even more preferably 1.2%. The preferred upper limit is 4%, more preferably 3%, and even more preferably 2%.

WO₃ is employed as a major component in this embodiment. It lowers the melting temperature of the glass and, when coexisting with TeO₂, improves the devitrification resistance stability of the glass. However, if the WO₃ content is too high, the relative content of TeO₂ decreases, adversely affecting devitrification resistance stability. From this perspective, the WO₃ content is from 0% to 35%. The preferred lower limit is 15%, more preferably 20%, and even more preferably 25%. The preferred upper limit is 33%, more preferably 30%, and even more preferably 27%.

In addition to the major components described above, other major components may be added within a range that does not hinder the achievement of the intended glass composition in this embodiment. Furthermore, if any of the major components other than the essential component TeO₂ are not employed as major components in this embodiment, those unused components may be introduced as additional components into the glass composition of this embodiment.

The content of the second most abundant major component, following the essential component TeO₂, is from 10% to 35% by mass%. The preferred lower limit is 15%, more preferably 18%, and even more preferably 21%. The preferred upper limit is 30%, more preferably 27%, and even more preferably 24%.

### <Glass Composition Containing the Fourth Additive Component Group>

Particularly in glass compositions containing the fourth additional component group, TeO₂ is an essential major component. It lowers the melting temperature of the glass and enhances devitrification resistance stability. However, if the TeO₂ content is too high, devitrification resistance stability decreases. From this perspective, the TeO₂ content is from 50% to 85%. The preferred lower limit is 60%, more preferably 65%, and even more preferably 70%. The preferred upper limit is 80%, more preferably 77%, and even more preferably 74%.

Bi₂O₃ is employed as a major component in this embodiment. It lowers the melting temperature of the glass and, when coexisting with TeO₂, improves the devitrification resistance stability of the glass. However, if the Bi₂O₃ content is too high, the relative content of TeO₂ decreases, adversely affecting devitrification resistance stability. From this perspective, the Bi₂O₃ content is from 0% to 35%. The preferred lower limit is 10%, more preferably 15%, and even more preferably 20%. The preferred upper limit is 30%, more preferably 27%, and even more preferably 24%.

B₂O₃ is employed as a major component in this embodiment. It enhances the devitrification resistance stability of the glass. However, if the B₂O₃ content is too high, the melting temperature increases. From this perspective, the B₂O₃ content is from 0% to 15%. The preferred lower limit is 2%, more preferably 4%, and even more preferably 6%. The preferred upper limit is 12%, more preferably 10%, and even more preferably 8%.

GeO₂ is employed as a major component in this embodiment. It improves the devitrification resistance stability of the glass. However, if the GeO₂ content is too high, the melting temperature of the glass increases. Additionally, GeO₂ is an expensive raw material. From this perspective, the GeO₂ content is from 0% to 20%. The preferred lower limit is 4%, more preferably 8%, and even more preferably 12%. The preferred upper limit is 18%, more preferably 16%, and even more preferably 14%.

Al₂O₃ is employed as a major component in this embodiment. When appropriately added, it enhances the devitrification resistance stability of the glass. However, if the Al₂O₃ content is too high, the melting temperature increases, and devitrification resistance stability decreases. From this perspective, the Al₂O₃ content is from 0% to 10%. The preferred lower limit is 0.3%, more preferably 0.7%, and even more preferably 1%. The preferred upper limit is 7%, more preferably 5%, and even more preferably 2%.

Ga₂O₃ is employed as a major component in this embodiment. It improves the devitrification resistance stability of the glass. However, if the Ga₂O₃ content is too high, the melting temperature of the glass increases. Additionally, Ga₂O₃ is an expensive raw material. From this perspective, the Ga₂O₃ content is from 0% to 20%. The preferred lower limit is 4%, more preferably 8%, and even more preferably 12%. The preferred upper limit is 18%, more preferably 16%, and even more preferably 14%.

WO₃ is employed as a major component in this embodiment. It lowers the melting temperature of the glass and, when coexisting with TeO₂, enhances the devitrification resistance stability of the glass. However, if the WO₃ content is too high, the relative content of TeO₂ decreases, adversely affecting devitrification resistance stability. From this perspective, the WO₃ content is from 0% to 35%. The preferred lower limit is 15%, more preferably 20%, and even more preferably 25%. The preferred upper limit is 33%, more preferably 30%, and even more preferably 27%.

Li₂O is employed as a major component in this embodiment. It lowers the melting temperature of the glass and improves its meltability. However, if the Li₂O content is too high, the viscosity of the glass decreases, and its devitrification resistance stability deteriorates. From this perspective, the Li₂O content is from 0% to 10%. The preferred lower limit is 0.5%, more preferably 1.5%, and even more preferably 2.5%. The preferred upper limit is 8%, more preferably 6%, and even more preferably 3.5%.

La₂O₃ is employed as a major component in this embodiment. When appropriately added, it improves devitrification resistance stability. However, if the La₂O₃ content is too high, the melting temperature of the glass increases, fusibility decreases, and devitrification resistance stability is adversely affected. From this perspective, the La₂O₃ content is from 0% to 5%. The preferred lower limit is 0.4%, more preferably 0.8%, and even more preferably 1.2%. The preferred upper limit is 4%, more preferably 3%, and even more preferably 2%.

BaO is employed as a major component in this embodiment. It improves the devitrification resistance stability of the glass and enhances devitrification resistance stability when coexisting with TeO₂. However, if the BaO content is too high, the melting temperature of the glass increases. From this perspective, the BaO content is from 0% to 30%. The preferred lower limit is 10%, more preferably 15%, and even more preferably 20%. The preferred upper limit is 28%, more preferably 25%, and even more preferably 22%.

ZnO is employed as a major component in this embodiment. It improves the devitrification resistance stability of the glass and enhances devitrification resistance stability when coexisting with TeO₂. However, if the ZnO content is too high, the melting temperature of the glass increases. From this perspective, the ZnO content is from 0% to 20%. The preferred lower limit is 2%, more preferably 6%, and even more preferably 10%. The preferred upper limit is 18%, more preferably 16%, and even more preferably 14%.

In addition to the major components described above, other major components may be added within a range that does not hinder the achievement of the intended glass composition in this embodiment. Furthermore, if any of the major components other than the essential component TeO₂ are not employed as major components in this embodiment, those unused components may be introduced as additional components into the glass composition of this embodiment.

The content of the second most abundant major component, following the essential component TeO₂, is from 10% to 35% by mass%. The preferred lower limit is 15%, more preferably 18%, and even more preferably 21%. The preferred upper limit is 30%, more preferably 27%, and even more preferably 24%.

### <Glass Composition Containing the Fifth Additive Component Group>

Particularly in glass compositions containing the fifth additional component group, TeO₂ is an essential major component. It lowers the melting temperature of the glass and enhances devitrification resistance stability. However, if the TeO₂ content is too high, devitrification resistance stability decreases. From this perspective, the TeO₂ content is from 50% to 90%. The preferred lower limit is 60%, more preferably 65%, and even more preferably 70%. The preferred upper limit is 85%, more preferably 80%, and even more preferably 75%.

Bi₂O₃ is employed as a major component in this embodiment. It lowers the melting temperature of the glass and enhances its devitrification resistance stability when coexisting with TeO₂. However, if the Bi₂O₃ content is too high, the relative content of TeO₂ decreases, adversely affecting devitrification resistance stability. From this perspective, the Bi₂O₃ content is from 0% to 30%. The preferred lower limit is 10%, more preferably 15%, and even more preferably 20%. The preferred upper limit is 28%, more preferably 26%, and even more preferably 24%.

B₂O₃ is employed as a major component in this embodiment. It improves the devitrification resistance stability of the glass. However, if the B₂O₃ content is too high, the melting temperature increases. From this perspective, the B₂O₃ content is from 0% to 15%. The preferred lower limit is 2%, more preferably 4%, and even more preferably 6%. The preferred upper limit is 12%, more preferably 10%, and even more preferably 8%.

GeO₂ is employed as a major component in this embodiment. It enhances the devitrification resistance stability of the glass. However, if the GeO₂ content is too high, the melting temperature increases, and GeO₂ is also an expensive raw material. From this perspective, the GeO₂ content should range from 0% to 20%. The preferred lower limit is 4%, more preferably 8%, and even more preferably 12%. The preferred upper limit is 18%, more preferably 16%, and even more preferably 14%.

Al₂O₃ is employed as a major component in this embodiment. Adding it in appropriate amounts improves the devitrification resistance stability of the glass. However, if the Al₂O₃ content is too high, the melting temperature increases, adversely affecting devitrification resistance stability. From this perspective, the Al₂O₃ content is from 0% to 20%. The preferred lower limit is 4%, more preferably 8%, and even more preferably 10%. The preferred upper limit is 17%, more preferably 14%, and even more preferably 12%.

Ga₂O₃ is employed as a major component in this embodiment. It improves the devitrification resistance stability of the glass. However, if the Ga₂O₃ content is too high, the melting temperature of the glass increases, and Ga₂O₃ is an expensive raw material. From this perspective, the Ga₂O₃ content is from 0% to 20%. The preferred lower limit is 4%, more preferably 8%, and even more preferably 12%. The preferred upper limit is 18%, more preferably 16%, and even more preferably 14%.

Li₂O is employed as a major component in this embodiment. It lowers the melting temperature of the glass and improves its meltability. However, if the Li₂O content is too high, the viscosity of the glass decreases, and its devitrification resistance stability deteriorates. From this perspective, the Li₂O content is from 0% to 10%. The preferred lower limit is 0.5%, more preferably 1.5%, and even more preferably 2.5%. The preferred upper limit is 8%, more preferably 6%, and even more preferably 3.5%.

La₂O₃ is employed as a major component in this embodiment. Adding it in appropriate amounts improves the devitrification resistance stability of the glass. However, if the La₂O₃ content is too high, the melting temperature increases, reducing fusibility and adversely affecting devitrification resistance stability. From this perspective, the La₂O₃ content is from 0% to 5%. The preferred lower limit is 0.4%, more preferably 0.8%, and even more preferably 1.2%. The preferred upper limit is 4%, more preferably 3%, and even more preferably 2%.

BaO is employed as a major component in this embodiment. It improves the devitrification resistance stability of the glass and enhances devitrification resistance stability when coexisting with TeO₂. However, if the BaO content is too high, the melting temperature increases. From this perspective, the BaO content is from 0% to 30%. The preferred lower limit is 10%, more preferably 15%, and even more preferably 20%. The preferred upper limit is 28%, more preferably 25%, and even more preferably 22%.

ZnO is employed as a major component in this embodiment. It improves the devitrification resistance stability of the glass and enhances devitrification resistance stability when coexisting with TeO₂. However, if the ZnO content is too high, the melting temperature increases. From this perspective, the ZnO content is from 0% to 20%. The preferred lower limit is 2%, more preferably 6%, and even more preferably 10%. The preferred upper limit is 18%, more preferably 16%, and even more preferably 14%.

WO₃ is employed as a major component in this embodiment. It lowers the melting temperature of the glass and enhances its devitrification resistance stability when coexisting with TeO₂. However, if the WO₃ content is too high, the relative content of TeO₂ decreases, adversely affecting devitrification resistance stability. From this perspective, the WO₃ content is from 0% to 35%. The preferred lower limit is 15%, more preferably 20%, and even more preferably 25%. The preferred upper limit is 33%, more preferably 30%, and even more preferably 27%.

In addition to the major components described above, other major components may be added within a range that does not hinder the achievement of the intended glass composition in this embodiment. Furthermore, if any of the major components other than the essential component TeO₂ are not used as major components in this embodiment, they may be introduced as additional components into the glass composition.

The content of the second most abundant major component, following the essential component TeO₂, is from 10% to 35% by weight. The preferred lower limit is 15%, more preferably 18%, and even more preferably 21%. The preferred upper limit is 30%, more preferably 27%, and even more preferably 24%.

### <Standard Reference Glass>

The standard reference glass of this embodiment includes the aforementioned glass composition as a standard reference sample for elemental analysis. It contains: a first glass composition in which at least one additional from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm, Yb, Lu, Rb, Cs, Ba, Ga, Ge, In, Sn, Sb, Pb, Bi, Au, Pt, Ag, Ir, Pd, Rh, Ru, Re, F, Cl, Br, I, S is introduced in amounts of 0-1500 mg/kg (first content amount) for each additional component, and a second glass composition in which at least one of the above additionals is introduced in an amount more than 0 and up to 1500 mg/kg (second content amount) for each additional component, wherein the second content amount being greater than the first content amount.

Additional components are introduced into the first glass composition in an amount of 0-1500 mg/kg (first content amount). The lower limit of the first content amount is preferably 0 mg/kg. From the perspective of analytical quantification limits and impurities in raw materials, values below 1 mg/kg are regarded as essentially 0 mg/kg. The upper limit of the first content amount is preferably 15 mg/kg, more preferably 10 mg/kg, and even more preferably 5 mg/kg.

Additional components are introduced into the second glass composition in an amount more than 0 to 1500 mg/kg (second content amount). The lower limit of the second content amount is preferably 15 mg/kg, more preferably 30 mg/kg, and even more preferably 40 mg/kg. The upper limit is preferably 500 mg/kg, more preferably 100 mg/kg, and even more preferably 60 mg/kg.

The second content amount of the additional components in the second glass composition is preferably higher than the first content amount in the first glass composition. To function as a standard reference glass material, it is preferable that the first and second additives are the same. Furthermore, the major component types and composition ratios in the first and second glass compositions may be the same. If the major component composition of the second glass composition is aligned with the first glass composition, any variations in major component composition due to increased additive concentrations are considered essentially equivalent.

The standard reference glass may preferably include a third glass composition in addition to the first and second glass compositions.

Additional components are introduced into the third glass composition in an amount more than 0 and up to 1500 mg/kg (third content amount). The lower limit of the third content amount is preferably 500 mg/kg, more preferably 750 mg/kg, and even more preferably 950 mg/kg. The upper limit of the third content amount is preferably 1400 mg/kg, more preferably 1250 mg/kg, and even more preferably 1050 mg/kg.

The third content amount of the additional components in the third glass composition is preferably higher than both the first content amount in the first glass composition and the second content amount in the second glass composition. To function as a standard reference glass material, it is preferable that the first, second, and third additives are the same. Furthermore, the major component types and composition ratios in the first, second, and third glass compositions may be the same. If the major component composition of the second and third glass compositions is aligned with the first glass composition, any variations in major component composition due to increased additive concentrations are considered essentially equivalent.

Other optional components may also be added as long as they do not hinder the achievement of the intended first, second, and third glass compositions. The described standard reference glass material includes three glass compositions with different additive concentrations, but the material may consist of at least two glasses with varying concentrations.

### <Method for Producing Glass Compositions>

The method for producing the first glass composition, the second glass composition, and the third glass composition contained in the glass composition according to the present embodiment and the standard reference glass material according to the present embodiment, is explained as follows.

The method for producing the first glass composition, the second glass composition, and the third glass composition contained in the glass composition according to the present embodiment and the standard reference glass material according to the present embodiment, involves the following steps:
i): Cleaning crucibles and tools used for melting
   Submerging the crucible and melting-related tools in an acidic solution for 1-24 hours.
ii): Rinsing
   Rinsing the crucible and tools with purified water.
iii): Drying
   Drying the crucible and tools.
iv): Mixing and melting
   Mixing the major components with additives selected from the first to fifth additive groups inside the crucible, melting the mixture at 700-900°C while stirring for 30 minutes to 8 hours to obtain a homogeneous mixture.
v): Casting and annealing
   Pouring the mixture into a mold and gradually cooling it.

The types, proportions, and quantities of major components and additives should adhere to the descriptions of the glass compositions and standard reference glass material mentioned earlier.

### Step i)-iii)

To prevent contamination by impurities, the crucible, lids, stirring rods, and other melting tools should be immersed in an acidic solution for about 1-24 hours, preferably for 5-16 hours. The acidic solution should preferably contain at least one of hydrofluoric acid, hydrochloric acid, nitric acid, or sulfuric acid, with a 30-50% hydrofluoric acid solution being more favorable. After immersion, the tools are rinsed with purified water and dried.

The crucible, lids, stirring rods, and other melting tools should be made of materials that are low-reactive with molten glass and resistant to acid corrosion. Suitable materials include platinum, gold, iridium, and quartz. If the additive is a noble metal, it is preferable to use tools made from materials different from the additive.

### Step iv)

The major components are weighed to achieve the desired glass composition (by mass%).

The weighed major components are mixed and placed into a crucible, and a certain amount of the target additional element is added as needed. The introduction of the target additional element can be carried out by either directly adding raw materials such as oxides, hydroxides, carbonates, and nitrates or by dropping a predetermined amount of a nitrate aqueous solution containing the target additional element. When using the dropping method, it is not limited to nitrate aqueous solutions; any solution in which the target additional element is stably dissolved can be used.

Additives may be selectively added, with up to 16 types of elements incorporated into a single glass composition as needed.

The crucible is covered with a lid, and the mixture is melted at 700-900°C, preferably 750-850°C, for 30 minutes to 8 hours, preferably 1-5 hours, with stirring to ensure homogeneity.

### Step v)

The mixture is poured into a suitable mold and gradually cooled to produce glass samples. The formation of glass is confirmed by visually ensuring that no crystallization has occurred.

### <Properties of Glass Compositions>

The following describes the preferred properties of the first glass composition, the second glass composition, and the third glass composition contained in the glass composition according to the present embodiment and the standard reference glass material according to the present embodiment. The content of additional components differs among the first glass composition, the second glass composition, and the third glass composition.

The melting temperature of the first glass composition, the second glass composition, and the third glass composition contained in the glass composition according to the present embodiment and the standard reference glass material according to the present embodiment, is900°C or lower to prevent the volatilization of additive elements, ensuring stable additive concentrations. The upper limit of the melting temperature is preferably 850°C, more preferably 800°C.

The first glass composition, the second glass composition, and the third glass composition contained in the glass composition according to the present embodiment and the standard reference glass material according to the present embodiment, exhibit stability against devitrification while minimizing unintentional elements and incorporating intended trace elements in precise amounts.

The first glass composition, the second glass composition, and the third glass composition contained in the glass composition according to the present embodiment and the standard reference glass material according to the present embodiment with the described properties can serve as solid reference materials for elemental analysis. These compositions, with varying additive concentrations, can be used to create calibration curves for analytical techniques such as Inductively Coupled Plasma (ICP) Mass Spectrometry, Secondary Ion Mass Spectrometry (SIMS), and X-ray Fluorescence (XRF).

### <Examples>

The following describes examples of the present invention. The invention is not limited to these examples.

### <Preparation of Glass Composition>

The glass compositions of each example were prepared as described below.

First, the glass raw materials, such as oxides and carbonates, were weighed to achieve the chemical compositions (in weight percentages) listed in Tables 1-5, with a total weight of 100 g.

Additive components were introduced by directly incorporating raw materials containing the additional components.

The first additive group was introduced into the composition in the form of oxides, carbonates, or similar substances.

The second additive group was introduced into the composition in the form of oxides or similar substances.

The third additive group was introduced into the composition in the form of oxides, carbonates, or similar substances.

The fourth additive group was introduced into the glass composition in the form of oxides, chlorides, or similar substances.

The fifth additive group was introduced into the glass composition in the form of fluorides, chlorides, bromides, iodides, sulfates, or similar substances.

Next, the weighed glass raw materials were mixed and placed into a platinum crucible (for additives from the fourth additive group, a quartz crucible was used). The mixture was melted at 750-850°C for approximately one hour while stirring to ensure homogeneity. Subsequently, the mixture was poured into molds and gradually cooled to obtain glass samples. The glass formation was confirmed by visually ensuring the absence of crystallization.

To prevent contamination by impurities, platinum or quartz crucibles cleaned with hydrochloric acid or purified water were used.

### <Quantitative Analysis of Glass Compositions for Additive Groups 1, 2, 3, and 4>

The prepared glass samples were initially surface-cleaned with dilute acid and then pulverized. The pulverized samples were dissolved in an acidic solution and diluted with purified water to prepare test solutions.

### <Quantitative Analysis of Glass Compositions for Additive Group 5>

The glass samples were pulverized and used for combustion ion chromatography analysis.

For the first to fourth additive groups, the test solutions were analyzed using an ICP emission spectrometer (Hitachi High-Tech PS3500DDII) or an ICP mass spectrometer (Agilent 7700x). Calibration curves over appropriate concentration ranges were created using liquid reference materials with known concentrations of the additive elements. These curves were used to determine the amounts of additive elements in the glass samples.
For the fifth additive group, the gas components generated from the combustion of the powdered samples in a furnace (Yanaco YHS11) were analyzed using an ion chromatograph (Metrohm 940 Professional IC Vario). Calibration curves over appropriate concentration ranges were created using standard materials with known concentrations of the additive ions. These curves were used to determine the amounts of additive ions in the glass samples.

Table 1 shows the compositions (on a weight basis), ICP measurements, or combustion ion chromatography quantitative values for the first additive group (Examples 1-9).
Table 2 shows similar data for the second additive group (Examples 10-16).
Table 3 shows data for the third additive group (Examples 17-21). Table 4 shows data for the fourth additive group (Examples 22-28). Table 5 shows data for the fifth additive group (Examples 29-33).

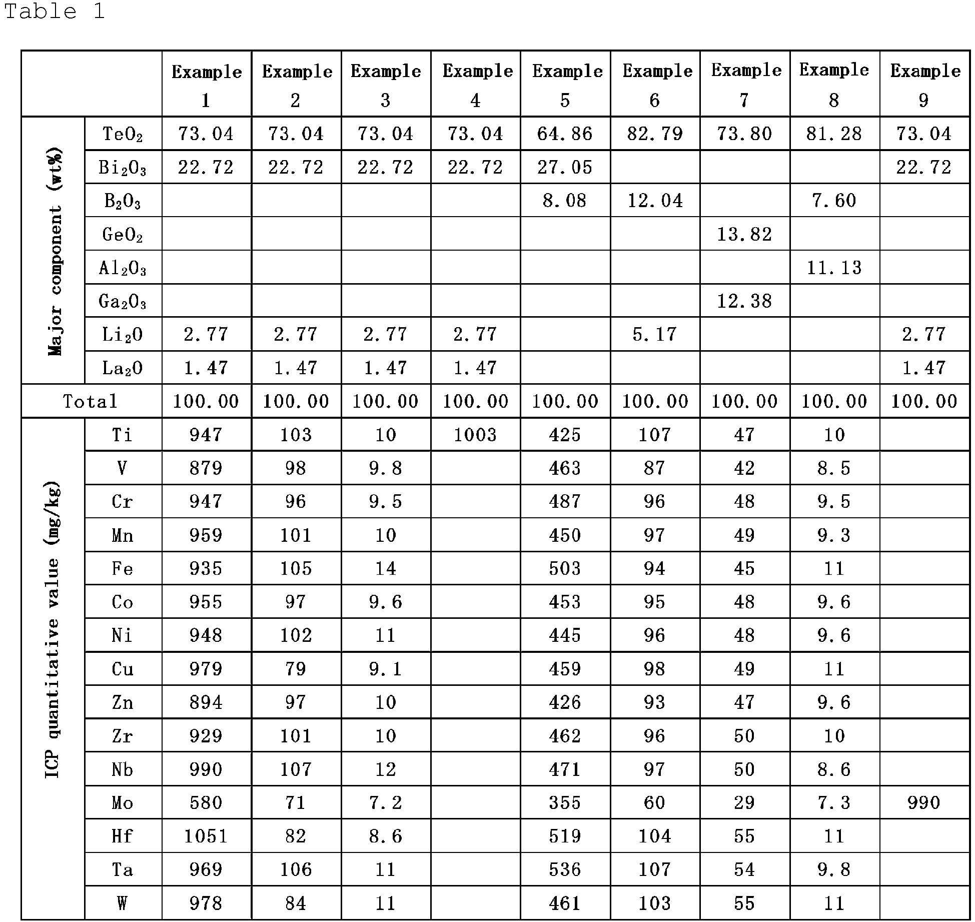

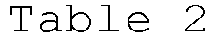

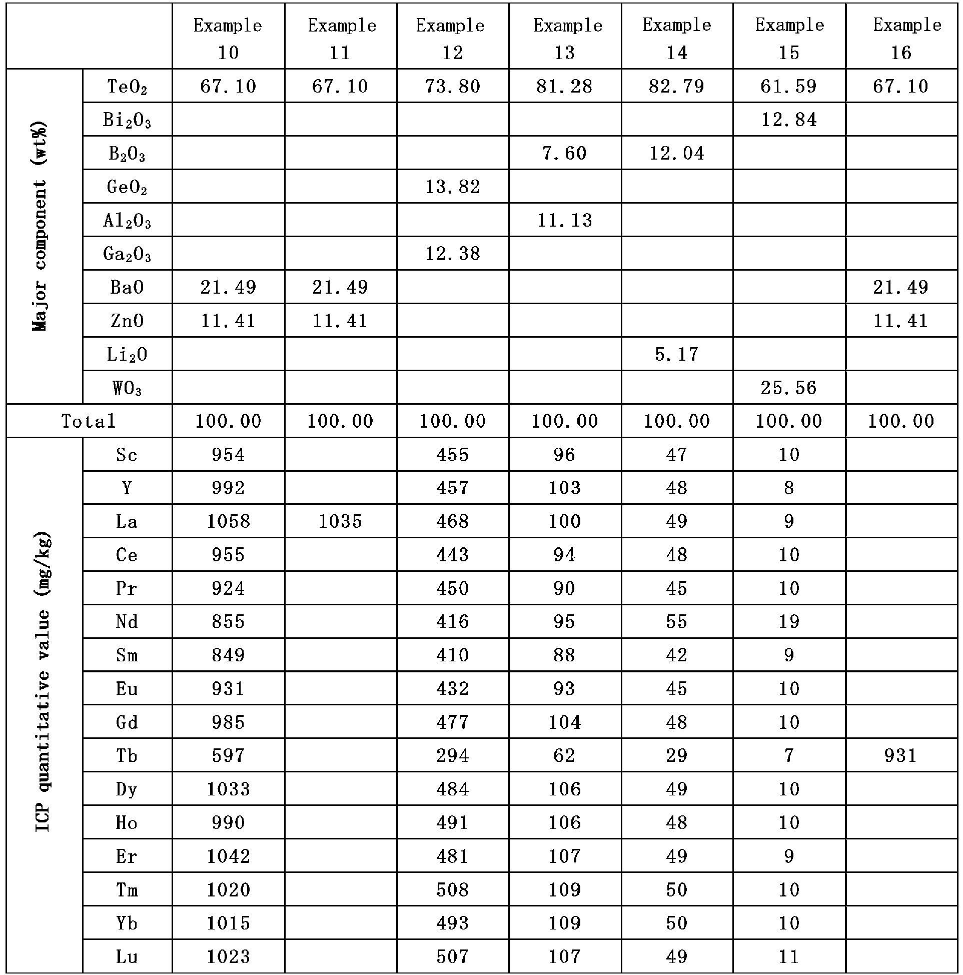

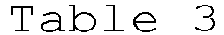

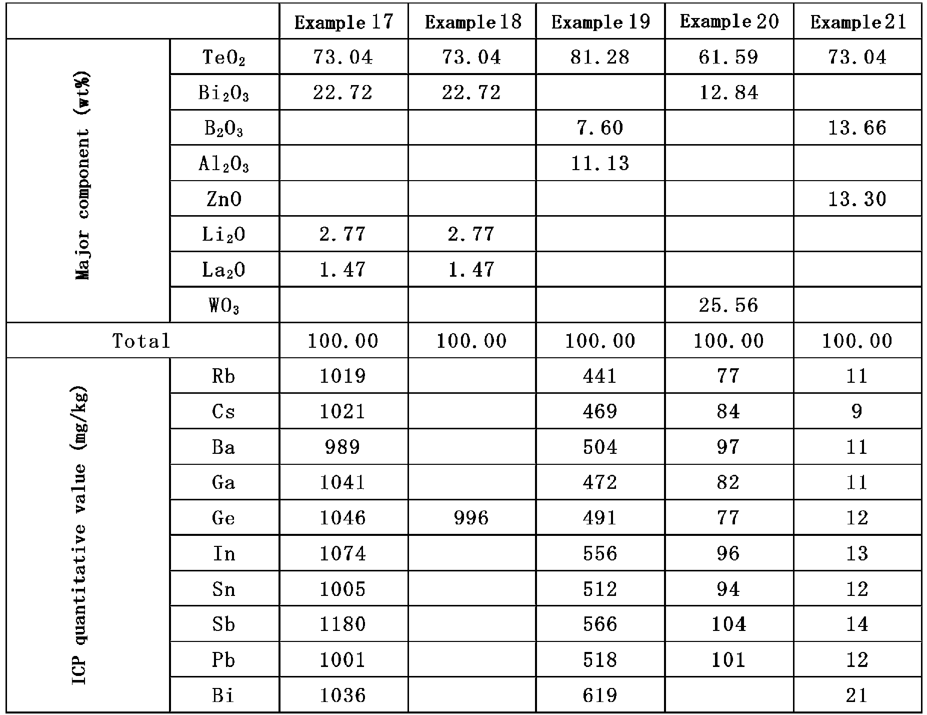

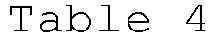

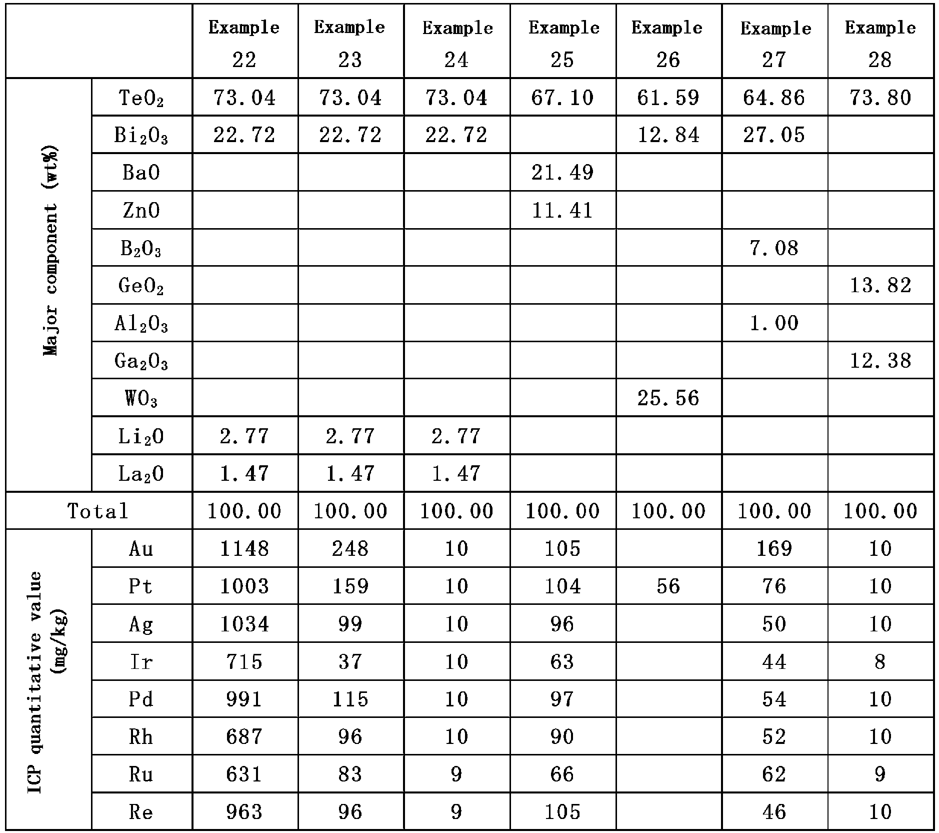

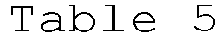

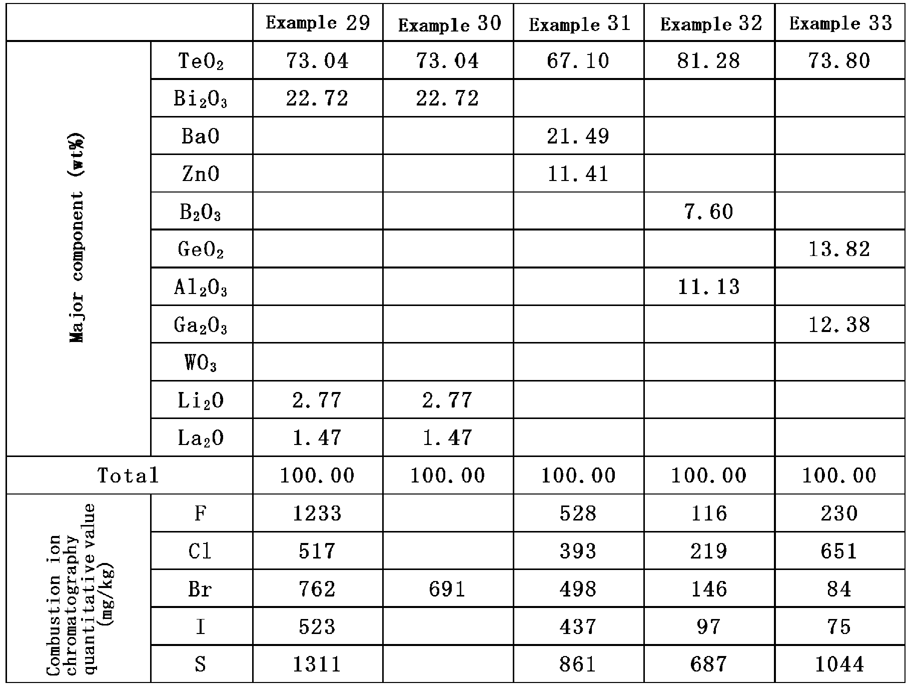

From the above, it was confirmed that the glass compositions of each example were successfully vitrified.

Additionally, the quantitative values obtained through ICP and other methods confirmed that the target additive elements were incorporated into the glass compositions at the desired concentrations.

## Claims

1. A glass composition comprising:
a major component; and
an additional component,
wherein the additional component includes at least one element selected from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm, Yb, Lu, Rb, Cs, Ba, Ga, Ge, In, Sn, Sb, Pb, Bi, Au, Pt, Ag, Ir, Pd, Rh, Ru, Re, F, Cl, Br, I, and S, and is introduced in an amount more than 0 mg/kg and up to 1500 mg/kg for each additional component.

2. The glass composition according to claim 1, wherein:
the major component comprises, by mass%, 50% to 90% of TeO₂.

3. The glass composition according to claim 1 or 2, wherein:
the major component wherein, by mass%:
a content rate of Bi₂O₃ is from 0% to 35%;
a content rate of B₂O₃ is from 0% to 20%;
a content rate of GeO₂ is from 0% to 20%;
a content rate of Al₂O₃ is from 0% to 20%;
a content rate of Ga₂O₃ is from 0% to 20%;
a content rate of BaO is from 0% to 30%;
a content rate of ZnO is from 0% to 20%;
a content rate of Li₂O is from 0% to 10%;
a content rate of La₂O₃ is from 0% to 5%;and
a content rate of WO₃ is from 0% to 35%
and the major component is other than the additional component.

4. The glass composition according to any one of claims 1 to 3, wherein:
the major components include at least two components including TeO₂ and a component other than the additional components.

5. The glass composition according to claim 4, wherein:
the major components include three components including TeO₂ and components other than the additional components.

6. The glass composition according to any one of claims 1 to 5, wherein:
the second most abundant major component among the major components is present in an amount of 10% to 35% by mass%.

7. A glass composition, wherein, by mass%:
a content rate of TeO₂ is 50% to 90%; and
at least two components selected from Bi₂O₃, B₂O₃, GeO₂, Al₂O₃, Ga₂O₃, Li₂O, La₂O₃, BaO, ZnO, and WO₃ are included.

8. The glass composition according to claim 7, wherein, by mass%:
a content rate of Bi₂O₃ is from 0% to 35%;
a content rate of B₂O₃ is from 0% to 20%;
a content rate of GeO₂ is from 0% to 20%;
a content rate of Al₂O₃ is from 0% to 20%;
a content rate of Ga₂O₃ is from 0% to 20%;
a content rate of Li₂O is from 0% to 10%;
a content rate of La₂O₃ is from 0% to 5%;
a content rate of BaO is from 0% to 30%;
a content rate of ZnO is from 0% to 20%; and
a content rate of WO₃ is from 0% to 35%.

9. The glass composition according to claim 7 or 8, wherein:
at least one component selected from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm, Yb, Lu, Rb, Cs, Ba, Ga, Ge, In, Sn, Sb, Pb, Bi, Au, Pt, Ag, Ir, Pd, Rh, Ru, Re, F, Cl, Br, I, and S is included as an additional component in an amount more than 0 mg/kg and up to 1500 mg/kg for each additional component.

10. A glass composition comprising:
a major component wherein, by mass%:
a content rate of TeO₂ is from 55% to 90%,
a content rate of Bi₂O₃ is from 0% to 35%,
a content rate of B₂O₃ is from 0% to 20%,
a content rate of GeO₂ is from 0% to 20%,
a content rate of Al₂O₃ is from 0% to 20%,
a content rate of Ga₂O is from 0% to 20%₃,
a content rate of Li₂O is from 0% to 10%, and
a content rate of La₂O₃ is from 0% to 5%;
and at least one component selected from Ti, V, Cr, Mn, Fe, Co, Ni, Cu, Zn, Zr, Nb, Mo, Hf, Ta, and W is included as an additional component in an amount more than 0 mg/kg and up to 1500 mg/kg for each additional component.

11. A glass composition comprising:
a major component wherein, by mass%:
a content rate of TeO₂ is from 50% to 90%,
a content rate of Bi₂O₃ is from 0% to 20%;
a content rate of B₂O₃ is from 0% to 20%;
a content rate of GeO₂ is from 0% to 20%;
a content rate of Al₂O₃ is from 0% to 20%;
a content rate of Ga₂O₃ is from 0% to 20%;
a content rate of BaO is from 0% to 30%;
a content rate of ZnO is from 0% to 20%;
a content rate of Li₂O is from 0% to 10%; and
a content rate of WO₃ is from 0% to 35%;
and at least one component selected from Sc, Y, La, Ce, Pr, Nd, Sm, Eu, Gd, Tb, Dy, Ho, Er, Tm, Yb, and Lu is included as an additional component in an amount more than 0 mg/kg and up to 1500 mg/kg for each additional component.

12. A glass composition comprising:
a major component wherein, by mass%:
a content rate of TeO₂ is from 50% to 90%,
a content rate of Bi₂O₃ is from 0% to 30%;
a content rate of B₂O₃ is from 0% to 20%;
a content rate of Al₂O₃ is from 0% to 20%;
a content rate of ZnO is from 0% to 20%;
a content rate of Li₂O is from 0% to 10%;
a content rate of La₂O₃ is from 0% to 5%; and
a content rate of WO₃ is from 0% to 35%;
and at least one component selected from Rb, Cs, Ba, Ga, Ge, In, Sn, Sb, Pb, and Bi is included as an additional component in an amount more than 0 mg/kg and up to 1500 mg/kg for each additional component;
and the major components exclude the additional components.

13. A glass composition comprising:
a major component wherein, by mass%:
a content rate of TeO₂ is from 50% to 85%,
a content rate of Bi₂O₃ is from 0% to 35%;
a content rate of B₂O₃ is from 0% to 15%;
a content rate of GeO₂ is from 0% to 20%;
a content rate of Al₂O₃ is from 0% to 10%;
a content rate of Ga₂O₃ is from 0% to 20%;
a content rate of BaO is from 0% to 30%;
a content rate of ZnO is from 0% to 20%;
a content rate of Li₂O is from 0% to 10%;
a content rate of La₂O₃ is from 0% to 5%; and
a content rate of WO₃ is from 0% to 35%;
and at least one component selected from Au, Pt, Ag, Ir, Pd, Rh, Ru, and Re is included as an additional component in an amount more than 0 mg/kg and up to 1500 mg/kg for each additional component.

14. A glass composition comprising:
a major component wherein, by mass%:
a content rate of TeO₂ is from 50% to 90%,
a content rate of Bi₂O₃ is from 0% to 30%;
a content rate of B₂O₃ is from 0% to 15%;
a content rate of GeO₂ is from 0% to 20%;
a content rate of Al₂O₃ is from 0% to 20%;
a content rate of Ga₂O₃ is from 0% to 20%;
a content rate of BaO is from 0% to 30%;
a content rate of ZnO is from 0% to 20%;
a content rate of Li₂O is from 0% to 10%;
a content rate of La₂O₃ is from 0% to 5%; and
a content rate of WO₃ is from 0% to 35%;
and at least one component selected from F, Cl, Br, I, and S is included as an additional component in an amount more than 0 mg/kg and up to 1500 mg/kg for each additional component.

15. The glass composition according to any one of claims 1 to 14, wherein:
the glass composition is a standard material for elemental analysis.

16. The glass composition according to claim 15, wherein:
the glass composition is a standard material for inductively coupled plasma (ICP) mass spectrometry, secondary ion mass spectrometry (SIMS), and/or X-ray fluorescence (XRF) analysis.

17. A standard reference glass for elemental analysis comprising:
a first glass composition, wherein at least one component selected from Ti, V, Cr, Mn, Fe, Co, Ni, Cu, Zn, Zr, Nb, Mo, Hf, Ta, W, Sc, Y, La, Ce, Pr, Nd, Sm, Eu, Gd, Tb, Dy, Ho, Er, Tm,
Yb, Lu, Rb, Cs, Ba, Ga, Ge, In, Sn, Sb, Pb, Bi, Au, Pt, Ag, Ir, Pd, Rh, Ru, Re, F, Cl, Br, I, and S is included as a first additional component in a first content amount; and
a second glass composition, wherein at least one of the additional components is included as a second additional component in a second content amount greater than the first content amount.

18. The standard reference glass for elemental analysis according to claim 17, wherein:
the first content amount is 0 mg/kg to 1500 mg/kg for each additional component; and
the second content amount is more than 0 mg/kg and is up to 1500 mg/kg for each additional component.

19. The standard reference glass for elemental analysis according to claim 17 or 18, wherein:
the second additional component is the same as the first additional component.

20. The standard reference glass for elemental analysis according to any one of claims 17 to 19, wherein:
the standard reference glass further comprises a third glass composition in which at least one component is included as a third additional component in a third content amount, and
the third content amount is greater than both the first content amount and the second content amount.

21. The standard reference glass for elemental analysis according to claim 20, wherein:
the first content amount is 0 mg/kg.

22. The standard reference glass for elemental analysis according to claim 20 or 21, wherein:
the third content amount is more than 0 mg/kg and is up to 1500 mg/kg for each additional component.

23. The standard reference glass for elemental analysis according to any one of claims 20 to 22, wherein:
the third additional component is the same as the first and second additional components.

24. The standard reference glass for elemental analysis according to any one of claims 20 to 23, wherein:
the first and second glass compositions each contain, by mass%, 50% to 70% of TeO₂ as a major component.

25. The standard reference glass for elemental analysis according to claim 24, wherein:
the major component wherein, by mass%:
a content rate of Bi₂O₃ is from 0% to 35%;
a content rate of B₂O₃ is from 0% to 20%;
a content rate of GeO₂ is from 0% to 20%;
a content rate of Al₂O₃ is from 0% to 20%;
a content rate of Ga₂O₃ is from 0% to 20%;
a content rate of BaO is from 0% to 30%;
a content rate of ZnO is from 0% to 20%;
a content rate of Li₂O is from 0% to 10%;
a content rate of La₂O₃ is from 0% to 5%; and
a content rate of WO₃ is from 0% to 35%;
and the major component is other than the additional component.

26. The standard reference glass for elemental analysis according to claim 24 or 25, wherein:
the first and second glass compositions each contain at least two components including TeO₂ among the major components and a component other than the additional components.

27. The standard reference glass for elemental analysis according to claim 26, wherein:
the first and second glass compositions each contain three components including TeO₂ among the major components and components other than the additional components.

28. The standard reference glass for elemental analysis according to any one of claims 24 to 27, wherein:
the second most abundant major component among the major components in the first glass composition is present in an amount of 10% to 35% by mass.

29. The standard reference glass for elemental analysis according to any one of claims 24 to 28, wherein:
the second most abundant major component among the major components in the second glass composition is present in an amount of 10% to 35% by mass.

30. The standard reference glass for elemental analysis according to any one of claims 24 to 29, wherein:
the major component in the second glass composition is of the same type as that in the first glass composition.

31. The standard reference glass for elemental analysis according to claim 30, wherein:
the major component in the second glass composition has the same type and proportion as that in the first glass composition.

32. The standard reference glass for elemental analysis according to any one of claims 21 to 31, wherein:
the third glass composition contains, by mass%, 50% to 70% of TeO₂ as a major component.

33. The standard reference glass for elemental analysis according to claim 32, wherein:
the major component wherein, by mass%:
a content rate of Bi₂O₃ is from 0% to 35%;
a content rate of B₂O₃ is from 0% to 20%;
a content rate of GeO₂ is from 0% to 20%;
a content rate of Al₂O₃ is from 0% to 20%;
a content rate of Ga₂O₃ is from 0% to 20%;
a content rate of BaO is from 0% to 30%;
a content rate of ZnO is from 0% to 20%;
a content rate of Li₂O is from 0% to 10%;
a content rate of La₂O₃ is from 0% to 5%; and
a content rate of WO₃ is from 0% to 35%;
and the major components exclude the additional components.

34. The standard reference glass for elemental analysis according to any one of claims 20 to 33, wherein:
the major component in the third glass composition is of the same type as that in the first and second glass compositions.

35. The standard reference glass for elemental analysis according to claim 34, wherein:
the major component in the third glass composition has the same type and proportion as that in the first and second glass compositions.

36. The standard reference glass for elemental analysis according to any one of claims 17 to 35, wherein:
the standard reference glass is a standard material for inductively coupled plasma (ICP) mass spectrometry, secondary ion mass spectrometry (SIMS), and/or X-ray fluorescence (XRF) analysis.
